Europäisches Patentamt

European Patent Office

Office européen des brevets

(11) Publication number: **0 392 104**
**A1**

## EUROPEAN PATENT APPLICATION

(21) Application number: **89303698.8**

(22) Date of filing: **13.04.89**

(51) Int. Cl.⁵: **G01C 21/16**

| | |
|---|---|
| The title of the invention has been amended (Guidelines for Examination in the EPO, A-III, 7.3). | (71) Applicant: **Litton Systems, Inc.**<br>**360 North Crescent Drive**<br>**Beverly Hills California 90210-9990(US)** |
| (43) Date of publication of application:<br>**17.10.90 Bulletin 90/42** | (72) Inventor: **Huddle, James R.**<br>**9736 Trigger Pace**<br>**Chatsworth California 91311(US)** |
| (84) Designated Contracting States:<br>**DE FR GB** | (74) Representative: **Godsill, John Kenneth et al**<br>**Haseltine Lake & Co. Hazlitt House 28**<br>**Southampton Buildings Chancery Lane**<br>**London WC2A 1AT(GB)** |

(54) **Inertial navigation system.**

(57) A navigation method and apparatus for reducing substantially the measurement errors such as accelerometer bias, gyro drift rate, gyro scale factor errors, and gyro sensing axis orientation uncertainty. The navigation apparatus includes a first gimbal (16) for rotating a triad of gyroscopes (20,22,24) and accelerometers (26,28,30) about a first gimbal axis D1 at a predetermined angular rate. The axis is positioned in a plane whose orientation is fixed in inertial space (as, for example, parallel to the earth's equatorial plane). The direction of rotation about the first gimbal axis is periodically reversed. A second gimbal (18) is provided for rotating the triad of gyroscopes and accelerometers at a predetermined control angular rate. The second gimbal axis (D2) is directed along an axis orthogonal to the plane described above whose orientation is fixed in inertial space (as, for example, the earth's polar axis if this plane is parallel to the equatorial plane of the earth). The direction of rotation about the second gimbal axis is periodically reversed.

FIG. 1

The present invention relates to inertial navigation systems. More particularly, this invention pertains to a method and apparatus for reducing the effects of gyro drift rate, gyro scale factor errors, gyro-sensing orientation uncertainties and accelerometer bias errors for a set of inertial instruments.

Inertial navigation systems are commonly utilized for determining the position of a vehicle relative to a coordinate system that is fixed relative to the earth which in turn rotates with respect to inertial space (the stars) located at a reference point such as the center of the earth. The computed position of the vehicle derived from the inertial instruments (gyros and accelerometers) is normally used to compute commands for controlling the vehicle.

Autonomous inertial navigation systems generally determine the position by means of on-board instruments which measure acceleration and angular rotation rate with respect to inertial space. Such navigation systems are particularly desirable for vehicles such as submarines which remain submerged for extended periods of time. Autonomous inertial navigation systems generally measure acceleration along each of three axes of an orthogonal coordinate system. After an initial alignment, the directions of these axes are determined by measuring their rotation with respect to inertial space by a triad of gyroscopes. The velocity and position of the vehicle are normally determined by transforming the accelerometer measurements to a convenient orthogonal coordinate frame whose axes are related to the earth (e.g., east, north and vertical axes), correcting for Coriolis acceleration components and the force of gravity and integrating once to obtain velocity and again to obtain position, with the aid of a computer.

When a triad (or more) of gyroscopes is rotated with respect to inertial space about a single axis, the gyroscope outputs generally include three kinds of drift errors: gyro drift rate, gyro scale factor error, and gyro misalignment (or sensing axes orientation uncertainty). As a result of such inherent errors, the directions of the measured accelerations, determined from the gyroscope outputs, produce a difference between the navigated and the actual or "true" position of the vehicle. Over the long term, such a difference may increase substantially and can prove to be dramatic.

The foregoing and additional problems and shortcomings of the prior art can be substantially overcome by embodiments of the present invention, such embodiments providing a navigation method and apparatus for reducing substantially the effect of measurement errors due to gyro drift rate, scale factor errors, and the sensing axis orientation uncertainty.

According to a first aspect of the present invention there is provided navigation apparatus for reducing measurement errors comprising: a navigation instrument that includes an instrument block, a plurality of gyroscopes having respective sensing axes and a plurality of accelerometers; means secured to the instrument to provide rotation at a first predetermined rate about a first axis.

According to a second aspect, there is provided an improvement to a navigation instrument of the type that includes a triad of gyroscopes having sensing axes directed along any three axes not lying in a common plane, such improvement including means secured to the navigation instrument for rotation at a predetermined rate about an axis.

According to a third aspect of the invention there is provided a method for reducing measurement errors in a navigation system of the type that includes a navigation instrument having a triad of gyroscopes with sensing. axes directed along the axes of a three-dimensional orthogonal coordinate system, the method including the positioning of an axis in a plane fixed in inertial space, and thereafter the navigation system is rotated at a predetermined rate about the axis.

For a better understanding of the present invention and as to how the same may be carried into effect, reference will now be made by way of example to the accompanying drawings in which:

Figure 1 is a schematic perspective view of an inertial navigation apparatus illustrating a gimbaled platform embodying the present invention; and

Figure 2 is a vectorial representation of the operation of the inertial navigation apparatus of Figure 1.

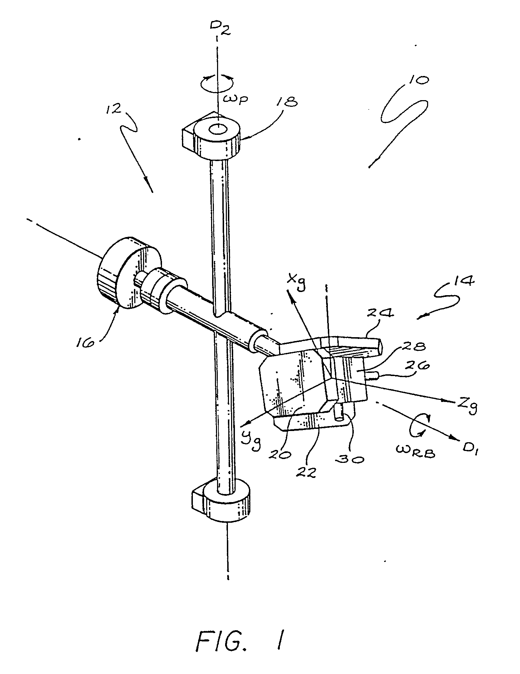

Turning now to the drawings, Figure 1 is a schematic view of an inertial navigation apparatus 10 incorporating a gimbaled platform 12 in accordance with the present invention. As will be seen, such an arrangement permits one to reduce errors that otherwise occur in system computed position as a result of gyro drift rate, gyro scale factor error, gyro sensing axis orientation uncertainty and accelerometer bias. The generalized concept of the invention utilizes a dual-axis reversing rate system for manipulating a cluster of inertial instruments 14. The cluster 14 may include three or more gyroscopes and three or more accelerometers. As a consequence of embodiments of the invention, the gyroscope constant errors of drift rate-bias, scale factor error, and sensing axis orientation uncertainty and accelerometer bias can average to zero. Further, time-variation of these same errors can produce only a square root of time divergence of navigation error, minimizing the navigated position error for long-term operation.

The platform 12 generally comprises a first gimbal 16 that permits rotation at an angular rate

$\omega_{RB}$, for example a triad of gyros and accelerometers (instrument cluster 14) about the stabilized axis $D_1$ of the first gimbal 16 with respect to inertial space. The first gimbal axis $D_1$ lies in a plane that is fixed with respect to inertial space as for example parallel to the earth's equatorial plane.

A second gimbal 18 is arranged to permit the cluster of gyros and accelerometers 14 to rotate at an angular control rate $\omega_p$ about the second gimbal axis $D_2$. The second gimbal axis $D_2$ is orthogonal to the carousel axis $D_1$ and directed along the earth's polar axis when the plane in which the first gimbal axis rotates with respect to inertial space is parallel with the equator. In this instance, the second gimbal axis $D_2$ is designated the polar axis.

While the instrument block 14 as illustrated comprises a triad of gyroscopes 20, 22 and 24, and a corresponding triad of accelerometers 26, 28 and 30, the input axes of each of which coincides with a gyroscope input axis, it shall become apparent to those skilled in the art that additional gyroscopes and accelerometers (and other geometries including those in which the accelerometers and gyroscope sensing axes do not coincide) may also comprise the navigation instrument. The measurement errors with such modified navigation apparatus may also be reduced by employing the dual-axis gimbaled platform 12.

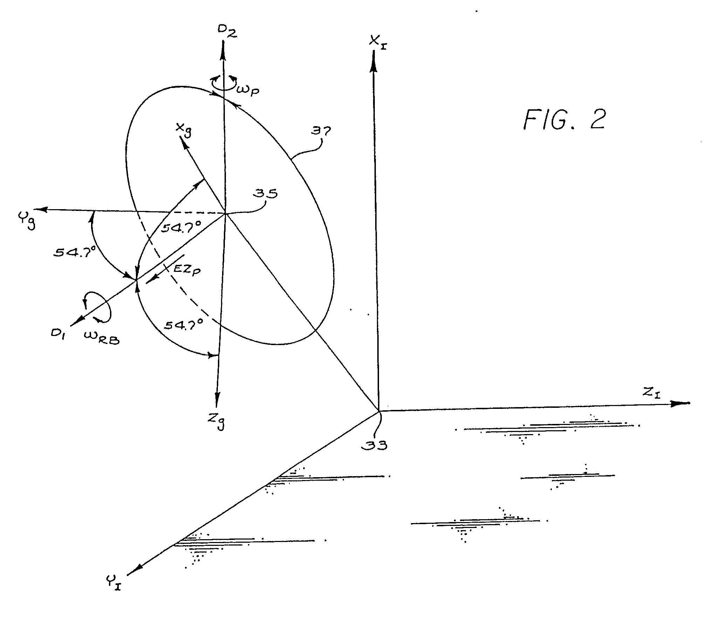

Figure 2 is a vectorial representation of the general operation of the inertial navigation apparatus 10 of Figure 1. A conventional right-handed inertial coordinate system ("I system") has orthogonal $X_I$, $Y_I$ and $Z_I$ axes radiating outwardly from a central reference point 33. Generally an earth-referenced system has the point 33 located at its center, the $X_I$ directed along the earth polar axis, and the $Y_I$ and $Z_I$ axes lying in the earth's equatorial plane.

The gyroscope input or sensing axes of the instrument block 14 directed along the $X_g$, $Y_g$ and $Z_g$ axes of a three-dimensional orthogonal coordinate system that is centered at a point 35. The first gimbal axis $D_1$ in this instance is angularly equidistant at 54.7 degrees from the gyroscope axes $X_g$, $Y_g$ and $Z_g$, and as described above, oriented in a plane parallel to the earth's equatorial plane defined by the $Y_I$ and $Z_I$ axes. The navigation triad 14 is rotated about the first gimbal axis $D_1$ at the rate-bias $\omega_{RB}$.

The rotation of navigation triad 14 as above provides a minimum drift rate with respect to the inertial space in the plane 37 that is orthogonal to the gimbal axis $D_1$. The projection of the total system gyro drift rate vector onto the plane 37 averages to zero for any constant or slow-changing (relative to the rate of angular rotation $\omega_{RB}$) drift rate of any of the gyroscopes 20, 22 or 24. It should be noted that the rate of angular rotation $\omega_{RB}$ need not

be constant or of fixed sign for projection of the gyroscope drift rates onto the plane orthogonal to the gimbal axis $D_1$ to average to zero. Nonetheless, the projection of the drift rates of the gyroscopes 20, 22 and 24 onto the first gimbal axis $D_1$, represented by the vector $EZ_p$, does not average to zero.

The long-term position error propagation for an inertial navigation system resulting from the gyro drift rate diverges in proportion to the projection of the total gyro drift rate vector onto the polar axis $X_I$ of the earth multiplied by the time. On the other hand, the projection of the gyro drift rate vector onto the equatorial plane defined by the $Y_I$ and $Z_I$ axes (when the drift rate vector is maintained in a fixed orientation with respect to the rotating earth), causes bounded oscillation of position and azimuth error for a constant drift rate and slowly-divergent position error in proportion to the square root of time for time-variable or noise-like drift rate error. Consequently, system position error propagation is substantially reduced by (1) positioning the first gimbal axis $D_1$ in a plane parallel to the earth's equatorial plane and (2) utilizing the first gimbal 16 to cause the projection of the total system gyro drift rate vector onto the gimbal axis $D_1$ to be maintained nominally in the equatorial plane. Furthermore, when the gimbal axis $D_1$ is maintained nominally orthogonal to the earth-fixed east direction in the equatorial plane, azimuth misalignment due to the drift rate vector along the gimbal axis $D_1$ is minimized since the projection of the drift rate vector along the gimbal axis $D_1$ onto the east axis is minimal or null.

Further, the direction of rotation of the gimbal axis $D_1$ is periodically reversed .

Such reversal of direction reduces the drift rate along the first gimbal axis $D_1$ due to gyro scale factor error and gyro- sensing axis orientation uncertainty. Such reversal also renders the use of slip rings for the first gimbal axis $D_1$ unnecessary, thereby enhancing system reliability.

The period of the reversing rotation of the first gimbal axis is generally substantially less than the time period over which the scale factor error and the orientation uncertainty may change as a result of environmental factors. Another consideration in determining this period is the desirability of cancelling the drift rate effect due to the scale factor error and orientation uncertainty on one rotation that is induced by the reversed rotation. Consequently, the angular rate $\omega_{RB}$ is periodically reversed to reduce the drift rate effects that result from gyro scale factor error and sensing axis orientation uncertainty induced by angular rotation about the first gimbal axis $D_1$.

A second rotation is imposed by the second gimbal 18 to further reduce the gyro scale factor error and sensing axis orientation uncertainty. Such rotation occurs about the second gimbal axis $D_2$ in such a way that the first gimbal axis $D_1$ is, in turn, rotated with respect to inertial space and about the earth's polar axis in this instance. The value of the second rate, $\omega_P$, (also known as the "control rate") is selected in accordance with factors and other considerations discussed below.

It is known that, when the control rate $\omega_P$ is equal and opposite to the earth's rotation, the change in direction of the drift rate error $EZ_P$ along the gimbal axis $D_1$ and with respect to the inertial space is zero. Thus, navigation system error will diverge as a function of time. Such a mode of operation is generally referred to as a "space-stable" mechanization. On the other hand, the navigation error due to the drift rate along the gimbal axis $D_1$ is reduced when the control rate $\omega_P$ is different from the earth's rotation rate. However, as the control rate P increases, a significant amount of drift is induced along the second gimbal axis $D_2$ (in this instance the earth's polar axis) due to a combination of gyro scale factor error and gyro sensing axis orientation uncertainty introduced by control angular rotation rate $\omega_P$ about the second gimbal axis $D_2$.

Such a drift rate produces divergent accumulation of navigation error about the polar axis. In the present embodiment such undesirable divergent accumulation of navigation error is avoided by periodically reversing the controlled rate P so that equal and opposite angular rates of the instrument cluster 14 about the polar axis are realized with respect to inertial space. As a result, the drift rate effect due to the gyro scale factor error and sensing axis orientation uncertainty is substantially reduced.

Thus it is seen that the present invention can provide a substantial improvement in the accuracy of inertial navigation systems by employing the foregoing dual-axis rotation technique. In this regard, navigation errors due to constant accelerometer biases, constant gyro drift rates, gyro scale factor errors, and gyro sensing axis orientation uncertainties are bounded to minimal values.

Furthermore, navigation errors due to instabilities in accelerometer biases, gyro drift rates, gyro scale factor errors and gyro sensing axis orientation uncertainties resulting from such effects as operating temperature instability, temperature gradient, stray magnetic fields and vibration are also substantially reduced. In the limit, propagation of navigation error due to such effects could approach the optimal square root of time dependence that is characteristic of gyro drift rate white noise.

While the invention has been described in a preferred embodiment, it must be kept in mind that all other embodiments following within the language of the claims that follow are intended to be included within its scope.

## Claims

1. Navigation apparatus for reducing measurement errors comprising, in combination:
a navigation instrument including an instrument block, a plurality of gyroscopes having respective sensing axes, and a plurality of corresponding accelerometers; and
first means secured to said navigation instrument for rotating said instrument at a first predetermined angular rate about a first axis.

2. Navigation apparatus including a navigation instrument having a triad of gyroscopes having sensing axes directed along any three axes not lying in a common plane, the improvement comprising first means secured to said navigation instrument for rotation at a first predetermined angular rate about a first axis.

3. Navigation apparatus as defined in CLaim 1 or 2 further including second means for rotating said instrument about a second axis substantially orthogonal to said first axis at a second predetermined angular rate.

4. Navigation apparatus as defined in Claim 1, 2 or 3 wherein said first means includes means for positioning said first axis in a plane that is fixed in inertial space.

5. Navigation apparatus as defined in Claim 4 wherein said second means includes means for positioning said second axis in a direction that is orthogonal to the plane fixed in inertial space.

6. Navigation apparatus as defined in Claim 1, 2, 3, 4 or 5 wherein said first means further includes means for reversing the direction of rotation about said first axis periodically, while substantially maintaining its absolute value.

7. Navigation apparatus as defined in Claim 3 or any one of claims 4 to 6 when appended to claim 3 wherein said second means further includes means for reversing the direction of rotation periodically about said second axis while substantially maintaining its absolute value.

8. Navigation apparatus as defined in Claim 1 or any one of claims 3 to 7 when appended thereto wherein said instrument includes three gyroscopes having their sensing axes directed along any three axes not lying in a common plane.

9. Navigation apparatus as defined in any preceding claim wherein said instrument includes at least three accelerometers.

10. Navigation apparatus as defined in any preceding claim wherein said first means comprises an inner gimbal.

11. Navigation apparatus as defined in claim 3 or 7 or any one of claims 4 to 6 when appended to claim 3 or any one of claims 8 to 10 when appended to claim 3 or 7 wherein said second means comprises a second gimbal.

12. Navigation apparatus as defined in Claim 10 wherein said first axis is a first gimbal axis.

13. Navigation apparatus as defined in Claim 11 wherein said second axis is a second gimbal axis.

14. Navigation apparatus as defined in claim 3 or any one of the claims appended thereto wherein said second predetermined angular rate is a control rate.

15. Navigation apparatus as defined in Claim 14 wherein said control rate is different in magnitude than the earth's rate of rotation.

16. A method for reducing measurement errors in a navigation apparatus of the type that includes a navigation instrument having a triad of gyroscopes with sensing axes directed along the axes of three-dimensional coordinate system, comprising the steps of:
positioning a first axis in a plane that is fixed in inertial space, and then rotating the navigation instrument at a first predetermined angular rate about said first axis.

17. A method as defined in Claim 16 further including the step of positioning a second axis in a direction that is orthogonal to the plane that is fixed in inertial space.

18. A method as defined in Claim 17 further including the step of rotating said instrument about said second axis at a second predetermined angular rate.

19. A method as defined in Claim 16, 17 or 18 further including the step of reversing the direction of rotation about said first axis periodically, while substantially maintaining its absolute value.

20. A method as defined in Claim 18 or 19 when appended to claim 17 further including the step of reversing the direction of rotation about said second axis periodically while substantially maintaining its absolute value.

FIG. 1

FIG. 2

EP 0 392 104 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 509 765 (STEVENSON et al.)<br>* Whole document * | 1,2,4,8-10,12,16 | G 01 C 21/16 |
| Y | | 17-20 | |
| X | US-A-4 017 187 (SCHWARTZ)<br>* Abstract; figure 3; claims 1,3,5 * | 1-3,6-13 | |
| Y | | 17-20 | |
| X | GB-A-1 143 033 (SPERRY)<br>* Figure 5; claims 1-3,5,8,9 * | 1,2,8-10,16 | |
| A | EP-A-0 109 784 (MARCONI)<br>* Abstract; figure 1 * | 1,2,16 | |

| | | | TECHNICAL FIELDS SEARCHED (Int. Cl.5) |
|---|---|---|---|
| | | | G 01 C |

The present search report has been drawn up for all claims

| Place of search | Date of completion of the search | Examiner |
|---|---|---|
| THE HAGUE | 27-11-1989 | KOLBE W.H. |